# EUROPÄISCHE PATENTSCHRIFT

(11) **EP 0 952 366 B1**
(45) Veröffentlichungstag und Bekanntmachung des Hinweises auf die Patenterteilung: **18.08.2004**
(21) Anmeldenummer: 99102332.6
(22) Anmeldetag: 06.02.1999
(51) Int. Cl.: F16D 25/12

(54) **Druckbegrenzer in einem hydraulischen Geberzylinder**
Pressure limiter in a hydraulic master cylinder
Limiteur de pression dans un maître-cylindre hydraulique

(30) Priorität: 22.04.1998 DE 19817915
(43) Veröffentlichungstag der Anmeldung: 27.10.1999
(73) Patentinhaber: ZF Sachs AG, 97424 Schweinfurt (DE)
(72) Erfinder: Grosspietsch, Wolfgang, Dipl.-Ing. (FH), 97422 Schweinfurt (DE)

(56) Entgegenhaltungen:
- GB-A- 2 241 298
- US-A- 3 307 667

## Beschreibung

Die Erfindung betrifft einen Druckmittelzylinder einer hydraulischen Betätigungseinrichtung, insbesondere zur Betätigung eines einer Kraftfahrzeugkupplung, gemäß dem Oberbegriff des Anspruchs 1.

Aus der DE 44 44 841 C2 ist eine hydraulische Betätigungseinrichtung mit einem Geberzylinder und einem Nehmerzylinder mit je einer Kolben-/Zylindereinheit bekannt geworden, deren Kolben mit je einer aus dem Zylinder herausgeführten Kolbenstange versehen ist und deren Kolbenräume durch eine Leitung und deren die beiden Kolbenstangen umgebende Stangenräume durch eine weitere Leitung miteinander verbunden sind, wobei die Kolbenräume mit ihrer Leitung einerseits und die Stangenräume mit ihrer weiteren Leitung andererseits je ein nach außen geschlossenes System bilden. Ferner ist ein Speicher im Geberzylinder und/oder Nehmerzylinder vorgesehen, der über eine erste Verbindungsleitung mit dem Kolbenraum und über eine zweite Verbindungsleitung mit den Stangenräumen verbunden ist, wobei in jeder Verbindungsleitung in paralleler Anordnung ein Rückschlagventil und ein Druckbegrenzungsventil so angeordnet sind, daß das Rückschlagventil in Richtung auf den Speicher schließt und das Druckbegrenzungsventil in Richtung auf den Speicher bei Überschreiten des begrenzten Druckes öffnet. Die Verwendung des Druckbegrenzungsventils ist auf einen gewählten oder auch einstellbaren Sicherheitsdruck einstellbar und erlaubt nur das Überströmen von Hydraulikflüssigkeit, wenn dieser Sicherheitsdruck überschritten wird.

in der US-Patentschrift 3,307,667 ist Druckmittelzylinder mit einem integrierten Druckbegrenzer offenbart, der entweder am Zylindergehäuse oder am Kolben angeordnet ist und bei Überschreiten eines Grenzdruckes eine direkte Strömungsverbindung für das im hydraulischen System befindliche Fluid zwischen einem Druckraum und einem drucklosem Raum öffnet und dadurch einem weiteren unerwünschten Druckanstieg entgegenwirkt. Die dort gezeigten Druckbegrenzer weisen allgemein zumindest einen vorgespannten beweglichen Ventilkörper, einen Ventilsitz und ein Federelement zur Erzeugung einer Vorspannkraft auf. Um einen solchen Druckbegrenzer in einen Druckmittelzylinder zu integrieren sind umfangreiche konstruktive Änderungen notwendig, wobei insbesondere Aufnahmeräume für die genannten zusätzlichen Elemente geschaffen werden müssen. Gleichzeitig erhöht sich ebenfalls der zeitliche Montageaufwand und die Montagekosten.

Vom Stand der Technik ausgehend, besteht die Aufgabe, einen Druckmittelzylinder mit einem integrierten Druckbegrenzer zu schaffen, der konstruktiv noch weiter vereinfacht ist und eine leichte Montage ermöglicht.

Die Aufgabe wird gelöst durch einen Druckmittelzylinder mit den im Kennzeichen des Anspruchs angegebenen Merkmalen. Vorteilhafte Weiterbildungen der Erfindungen sind in den Unteransprüchen beschrieben.

Gemäß der Erfindung ist vorgesehen, eine den Druckraum begrenzende, zwischen dem Kolben und dem Zylindergehäuse positionierte Dichtung so am Gehäuse anzuordnen, dass diese entgegen der Wirkung einer Vorspannkraft innerhalb eines vorgebbaren Bereichs axial verschiebbar ist. Bei Überschreitung eines definierbaren Grenzdruckes wird die Dichtung aus deren Ruhelage verschoben, wobei diese einen Kanal freigibt, der eine direkte Strömungsverbindung für das Fluid zwischen dem Druckraum und dem drucklosen Raum herstellt.

Mehrere Ausführungsbeispiele von Druckbegrenzern in Geberzylindern und/oder Nehmerzylindern sind in anliegenden Zeichnungen mit Ausschnittzeichnungen erläutert. Es zeigen:
- Fig. 1: einen Geberzylinder gemäß dem Stand der Technik;
- Fig. 2: die Anordnung des Geberzylinders in Verbindung mit einem Nehmerzylinder über eine Druckleitung mit einer Bypassleitung zu einem Ausgleichsgefäß in schematischer Darstellung;
- Fig. 3: einen Geberzylinder in einer vom Geberzylinder gemäß Fig. 1 verschiedenen Ausführung;
- Fig. 4: einen Kolben mit einem Rückschlagventil zur Einstellung eines maximalen Druckes im Druckraum;
- Fig. 5: eine Ausschnittszeichnung eines Rückschlagventils, dargestellt durch einen angefederten Ring als Fassung für eine Primärdichtung;
- Fig. 6: ein Rückschlagventil gemäß Fig. 5, jedoch mit einer als Blattfeder ausgebildeten Rückstellfeder für den Ring mit der Primärdichtung.

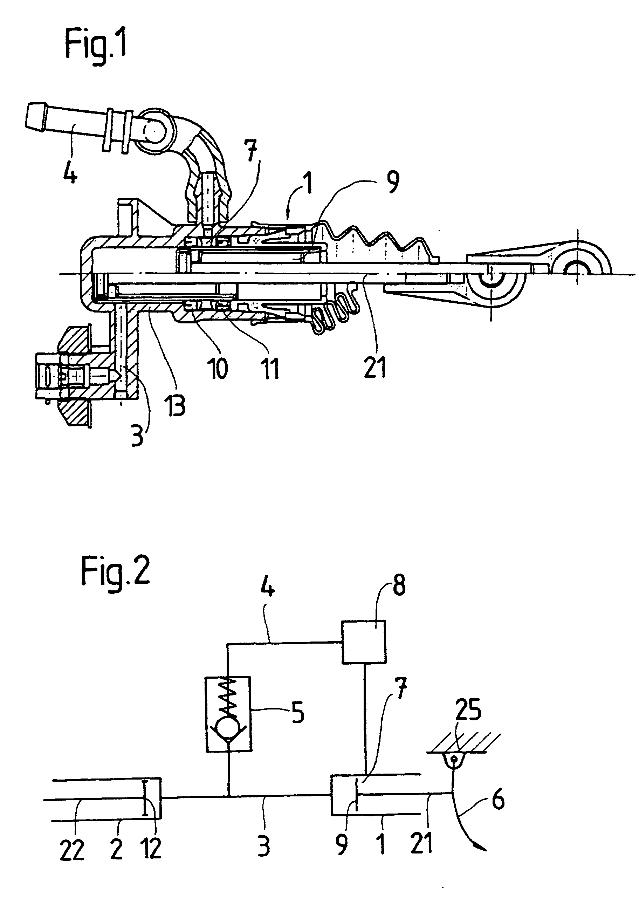

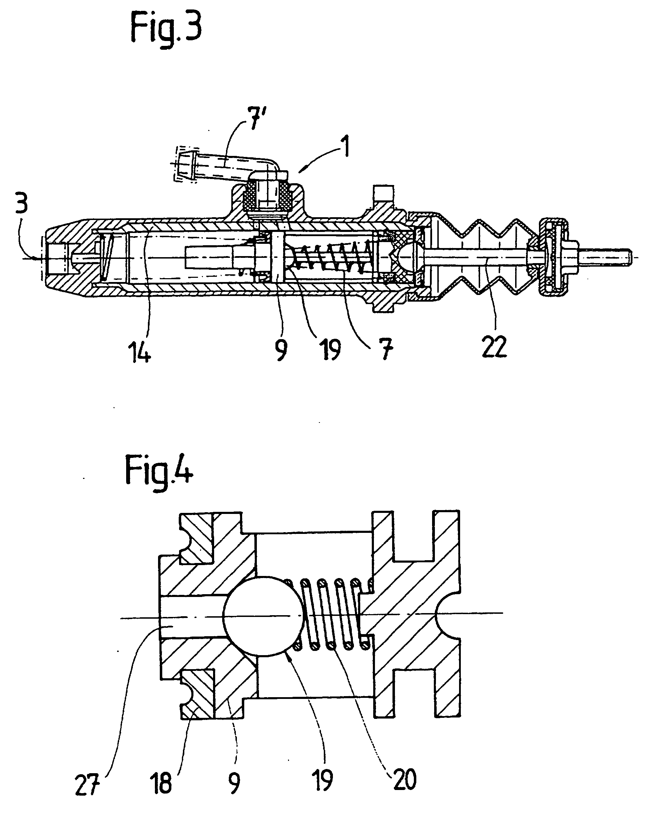

Wird mit 1 ein Geberzylinder und mit 2 eine Nehmerzylinder bezeichnet, so sind beide durch eine Zuleitung als Druckraum 3 miteinander verbunden. Gemäß Fig. 2 ist dies in einer Schemazeichnung dargestellt, wobei der Druckraum im Geberzylinder 1 von einem Kolben 9 und im Nehmerzylinder 2 von einem Kolben 12 begrenzt wird. Der vom Druckraum 3 aus gesehene drucklose Raum 7 ist ebenso wie der Druckraum 3 mit einem Fluid gefüllt und über eine Leitung 4 mit einem Vorratsbehälter 8 verbunden. Der so beschriebene Geberzylinder 1 ist ebenfalls in der Fig. 1 dargestellt, wo der drucklose Raum 7 von einer Primärdichtung 10 und einer Sekundärdichtung 11 innerhalb eines Gehäuses 13 begrenzt wird. Der Kolben 9 ist über eine Kolbenstange 21 mit einem Pedal 6 an der Karosserie 25 eines Fahrzeuges verbunden, wodurch es dem Fahrer des Fahrzeuges ermöglicht wird, die Betätigung eines an eine Kolbenstange 22 des Nehmerzylinders 2 angeschlossene Kupplung zu betätigen. Wie aus der Fig. 2 ersichtlich, ist zwischen dem Vorratsbehälter und der als Druckraum 3 ausgebildeten Zuleitung zwischen Geberzylinder 1 und Nehmerzylinder 2 eine Leitung 4 zum Ausgleichsbehälter 8 angeordnet, die ein federbelastetes Rückschlagventil 5 enthält, welches über Federkraft geeignet ist, die im Druckraum 3 auftretenden Drücke je nach Auslegung einer Feder zu begrenzen. Indessen gehört eine solche Anordnung zum Stand der Technik, weshalb vorgeschlagen wird, ein federbelastetes Rückschlagventil nicht mehr in einer Leitung 4, die als Bypassleitung zum drucklosen Ausgleichsbehälter 8 fungiert, vorzusehen, sondern dieses direkt in den Kolben 9 gemäß Fig. 4 einzubauen, wodurch der drucklose Raum 7 bei Überschreitung eines maximalen Grenzdruckes direkt mit dem Druckraum 3 verbunden wird.

Wie aus Fig. 3 hervorgeht, wird der Kolben 9 mit einer Öffnung 27 versehen, die den drucklosen Raum 7 mit dem Druckraum 3 verbinden kann, nämlich dann, wenn bei Überschreitung des Grenzdruckes ein Verschlußglied 19 öffnet, welches unter Vorspannung einer Feder 20 steht. Das Verschlußglied 19 ist vorzugsweise als Kugel ausgebildet, die durch die auf den Grenzdruck abgestimmte Feder 20 gegen die Öffnung 27 gepreßt wird. Die Feder 20 befindet sich im drucklosen Raum 7, der über die Leitung 4 mit dem Ausgleichsbehälter 8 in Verbindung steht. Vom Pedal 6 aus wird der Kolben 9 über eine Kolbenstange 22 gesteuert, wobei der Kolben 9 den Druckraum 3 über eine Kolbendichtung 18 gegen das Gehäuse 13 abdichtet.

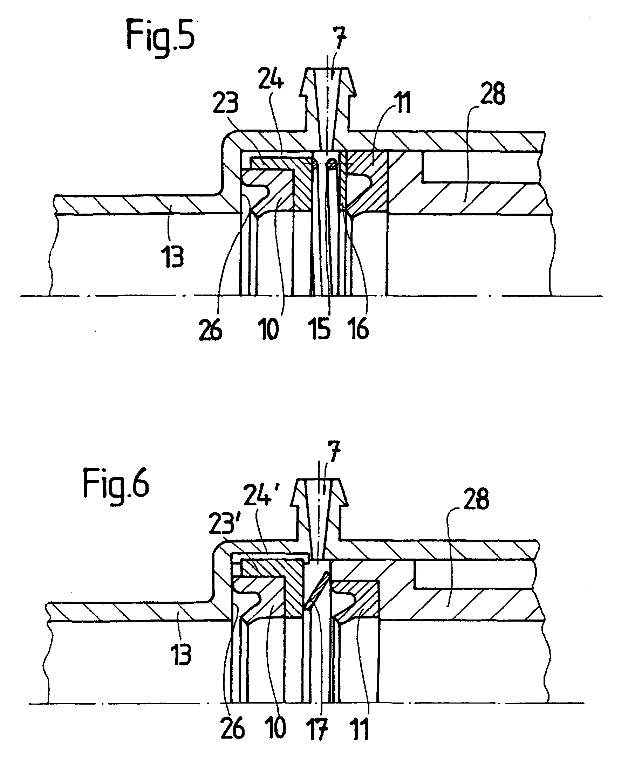

Ausgehend von einem bekannten Geberzylinder 1 mit am Gehäuse angeordneten Dichtungen gemäß Fig. 1 wird vorgeschlagen, den Druckraum 3 bei Erreichen des Grenzdruckes mit dem drucklosen Raum 7 dadurch zu verbinden, daß die Primärdichtung 10 gegen eine ringförmige Planfläche 26 im Gehäuse 13 angepreßt wird, wobei die auf die Primärdichtung 10 ausgeübte Haltekraft so groß ist, daß diese erst durch Überschreitung des Grenzdruckes im Druckraum 3 von der Planfläche weggeschoben werden kann, wobei das Fluid über einen vorgesehenen Kanal 24,24' in den drucklosen Raum entweichen kann. Gemäß Fig. 5 ist der Kanal 24 in einen Ring 23 integriert, der die Primärdichtung 10 aufnimmt und die Haltekraft, ausgeübt von einer Feder, insbesondere einer Wellfeder 15, an die Primärdichtung weitergeben kann. Die Wellfeder 15 stützt sich an einer Scheibe 16 gegen die Sekundärdichtung ab, die sich gegen die Stirnfläche einer Führungshülse 28 abstützt.

Gemäß Fig. 6 wird ein Rückschlagventil vorgeschlagen, welches ebenfalls aus der Primärdichtung 10 besteht, die sich gegen die Planfläche 26 im Gehäuse 13 abstützt, wobei die Primärdichtung 10 von einem Ring 23' gehalten wird, welcher von einer Tellerfeder 17 unter Vorspannung gehalten wird, die gerade so groß ist, daß sich die Primärdichtung 10 in axialer Richtung von der Planfläche 26 bei Überschreitung des Grenzdruckes im Druckraum 3 abhebt. Das Fluid strömt in diesem Falle an der Primärdichtung 10 vorbei über mindestens einen Kanal 24' in den drucklosen Raum 7. Die Tellerfeder 17 stützt sich entweder, wie in Fig. 5 beschrieben, an einer Scheibe 16 ab, die sich an die Sekundärdichtung 11 anlegt oder aber direkt an der Führungshülse 28, die den Kolben 9 gemäß der Darstellung in Fig. 1 führt.

Druckbegrenzer für hydraulische Betätigungseinrichtungen für Kraftfahrzeuge der vorgeschlagenen Art lassen sich gemäß den Figuren 4,5 und 6 vorteilhaft integrieren, ohne zusätzliche Aggregate zu verwenden und ohne die Herstellkosten nennenswert zu erhöhen.

## Patentansprüche

1. Druckmittelzylinder einer hydraulischen Betätigungseinrichtung, insbesondere zur Betätigung einer Kraftfahrzeugkupplung, umfassend
- ein Gehäuse (13) eines Geberzylinders (1), in dem ein erster Kolben (9) axial beweglich geführt wird,
- eine dem Geberzylinder (1) nachgeschaltete Einrichtung, insbesondere ein Nehmerzylinder (2) mit einem zweiten Kolben (12),
- einen mit Fluid befüllten Druckraum (3), der durch eine Zuleitung zwischen dem Geberzylinder (1 ) und der nachgeschalteten Einrichtung gebildet wird,
- wobei der Druckmittelzylinder mindestens eine Dichtung (10) aufweist, die den Druckraum (3) gegenüber einem drucklosem Raum (7) abdichtet und wobei
- der Zylinder einen Druckbegrenzer umfasst, der bei Überschreitung eines definierbaren Grenzdruckes eine direkte Strömungsverbindung für das Fluid zwischen dem Druckraum (3) und dem drucklosem Raum (7) herstellt,
**dadurch gekennzeichnet,**
**dass** die Dichtung (10) am Gehäuse (13) angeordnet ist und bei Überschreitung des definierbaren Grenzdruckes entgegen der Wirkung einer Vorspannkraft innerhalb eines vorgebbaren Bereichs axial verschiebbar ist und dadurch einen Kanal (24) freigibt, der die direkte Strömungsverbindung für das Fluid zwischen dem Druckraum (3) und dem drucklosem Raum (7) herstellt.

2. Druckmittelzylinder nach Anspruch 1,
**dadurch gekennzeichnet,**
**dass** die Dichtung (10) zumindest axial einseitig von einem Ring (23,23') aufgenommen ist, welcher zumindest teilweise die Berandung des Kanals (24) bildet und wobei die Vorspannkraft auf den Ring (23, 23') wirkt, wodurch die Dichtung (10) unterhalb des definierbaren Grenzdruckes dichtend gegen eine am Druckraum (3) ausgebildete Fläche (26) gedrückt wird.

3. Druckmittelzylinder nach einem der vorhergehenden Ansprüche,
**dadurch gekennzeichnet,**
**dass** die Vorspannung des Ringes (23,23') von einem federelastischen Element (15, 17) erzeugt wird.

4. Druckmittelzylinder nach einem der vorhergehenden Ansprüche,
**dadurch gekennzeichnet,**
**dass** sich das federelastische Element (15, 17) im drucklosen Raum (7) befindet.

5. Druckmittelzylinder nach einem der vorhergehenden Ansprüche,
**dadurch gekennzeichnet,**
**dass** sich das federelastische Element (15, 17) auf der dem Ring (23,23') abgewandten Seite gegen eine den drucklosen Raum (7) begrenzende Dichtung (11) abstützt.

6. Druckmittelzylinder nach einem der vorhergehenden Ansprüche,
**dadurch gekennzeichnet,**
**dass** sich das federelastische Element (15, 17) gegen ein mit dem Gehäuse (13) verbundenes Teil (28) abstützt.

## Claims

1. Pressure-medium cylinder for a hydraulic actuation device, in particular for actuating a motor-vehicle clutch, comprising
- a housing (13) of a master cylinder (1) in which a first piston (9) is guided so as to move axially,
- a device connected behind the master cylinder (1), in particular a slave cylinder (2) having a second piston (12),
- a pressure space (3) which is filled with fluid and is formed by a feed line between the master cylinder (1) and the device connected behind the latter,
- the pressure-medium cylinder having at least one seal (10) which seals the pressure space (3) with respect to a pressureless space (7), and
- the cylinder comprising a pressure limiter which, when a definable limit pressure is exceeded, produces a direct flow connection for the fluid between the pressure space (3) and the pressureless space (7),
**characterized in that** the seal (10) is arranged on the housing (13) and, when the definable limit pressure is exceeded, is axially displaceable counter to the action of a prestressing force within a predeterminable range, and, as a result, opens a duct (24) which produces the direct flow connection for the fluid between the pressure space (3) and the pressureless space (7).

2. Pressure-medium cylinder according to Claim 1, **characterized in that** the seal (10) is held, at least axially on one side, by a ring (23, 23') which at least partially forms the edge of the duct (24), and the prestressing force acting on the ring (23, 23'), as a result of which, below the definable limit pressure, the seal (10) is pressed sealingly against a surface (26) formed on the pressure space (3).

3. Pressure-medium cylinder according to one of the preceding claims, **characterized in that** the prestress of the ring (23, 23') is produced by a resilient element (15, 17).

4. Pressure-medium cylinder according to one of the preceding claims, **characterized in that** the resilient element (15, 17) is situated in the pressureless space (7).

5. Pressure-medium cylinder according to one of the preceding claims, **characterized in that**, on the side facing away from the ring (23, 23'), the resilient element (15, 17) is supported against a seal (11) which delimits the pressureless space (7).

6. Pressure-medium cylinder according to one of the preceding claims, **characterized in that** the resilient element (15, 17) is supported against a part (28) which is connected to the housing (13).

## Revendications

1. Cylindre à fluide hydrostatique d'un dispositif d'actionnement hydraulique, en particulier pour l'actionnement d'un embrayage de véhicule automobile, comprenant :
- un corps (13) d'un maître-cylindre (1) dans lequel un premier piston (9) est guidé de manière mobile axialement,
- un dispositif placé en aval du maître-cylindre (1), en particulier un cylindre récepteur (2) avec un deuxième piston (12),
- une chambre sous pression (3) remplie de fluide qui est constituée d'une conduite d'alimentation entre le maître-cylindre (1) et le dispositif placé en aval,
- où le cylindre à fluide hydrostatique présente au moins un joint (10) qui rend étanche la chambre sous pression (3) par rapport à une chambre à pression nulle (7) et où
- le cylindre comprend un limiteur de pression qui réalise, en cas de dépassement d'une pression limite réglable, une communication directe pour l'écoulement du fluide entre la chambre sous pression (3) et la chambre à pression nulle (7) **caractérisé en ce que** le joint (10) est disposé au niveau du corps (13) et que, lors de dépassement de la pression limite pouvant être choisie, il peut coulisser axialement à l'intérieur d'une plage prédéterminable en s'opposant à un effort de précontrainte, libérant ainsi l'accès à un canal (24) qui établit la communication directe de l'écoulement du fluide entre la chambre sous pression (3) et la chambre à pression nulle (7).

2. Cylindre à fluide hydrostatique selon la revendication 1, **caractérisé en ce que** le joint (10) est logé axialement au moins d'un côté d'une bague (23, 23') laquelle forme au moins partiellement le périmètre du canal (24) et où l'effort de précontrainte agit sur la bague (23, 23'), le joint (10) étant appuyée de manière étanche contre une surface (26) formée au niveau de la chambre sous pression (3) au-dessous de la pression limite pouvant être choisie.

3. Cylindre à fluide hydrostatique suivant l'une quelconque des revendications précédentes, **caractérisé en ce que** la précontrainte de la bague (23, 23') est réalisée par un élément à déformation élastique (15, 17).

4. Cylindre à fluide hydrostatique suivant l'une quelconque des revendications précédentes, **caractérisé en ce que** l'élément à déformation élastique (15, 17) se trouve dans la chambre à pression nulle (7).

5. Cylindre à fluide hydrostatique suivant l'une quelconque des revendications précédentes, **caractérisé en ce que** l'élément à déformation élastique (15, 17) s'appuie, du côté opposé à la bague (23, 23'), contre un joint (11) limitant la chambre à pression nulle (7).

6. Cylindre à fluide hydrostatique suivant l'une quelconque des revendications précédentes, **caractérisé en ce que** l'élément à déformation élastique (15, 17) s'appuie contre une pièce (28) reliée au corps (13).
